Europäisches Patentamt

European Patent Office

Office européen des brevets

(19)

(11) EP 0 776 432 B1

(12) **EUROPÄISCHE PATENTSCHRIFT**

(45) Veröffentlichungstag und Bekanntmachung des Hinweises auf die Patenterteilung:
**25.11.1998 Patentblatt 1998/48**

(51) Int Cl.⁶: **F16H 25/22**

(86) Internationale Anmeldenummer:
**PCT/DE96/01187**

(21) Anmeldenummer: **96922736.2**

(22) Anmeldetag: **27.06.1996**

(87) Internationale Veröffentlichungsnummer:
**WO 97/03308 (30.01.1997 Gazette 1997/06)**

(54) **VORRICHTUNG ZUR UMWANDLUNG EINER DREH- IN EINE AXIALBEWEGUNG**

DEVICE FOR CONVERTING ROTARY MOTION INTO AXIAL MOTION

DISPOSITIF DE CONVERSION D'UN MOUVEMENT ROTATIF EN UN MOUVEMENT AXIAL

(84) Benannte Vertragsstaaten:
**AT CH DE FR GB IT LI SE**

(30) Priorität: **07.07.1995 DE 19524772**

(43) Veröffentlichungstag der Anmeldung:
**04.06.1997 Patentblatt 1997/23**

(73) Patentinhaber: **Wittenstein GmbH & Co. KG
97999 Igersheim (DE)**

(72) Erfinder:
• **BUTSCH, Michael
D-88718 Daisendorf (DE)**

• **STAUCH, Roman
D-97999 Igersheim (DE)**

(74) Vertreter: **Patentanwalts-Partnerschaft
Rotermund + Pfusch
Waiblinger Strasse 11
70372 Stuttgart (DE)**

(56) Entgegenhaltungen:
**WO-A-95/08860          DE-U- 8 702 656
FR-A- 2 518 208**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung zur Umwandlung einer Dreh- in eine Axialbewegung nach dem Oberbegriff des Patentanspruchs 1.

Eine solche Vorrichtung ist aus DE-U-87 02 656.2 bekannt.

Hiervon ausgehend beschäftigt sich die Erfindung mit dem Problem, eine gattungsgemäße Vorrichtung bei einem konstruktiv möglichst kompakten und einfachen Aufbau funktionell zu verbessern.

Gelöst wird dieses Problem durch die Ausbildung einer gattungsgemäßen Vorrichtung nach den kennzeichnenden Merkmalen des Patentanspruchs 1.

Zweckmäßige Ausgestaltungen sind Gegenstand der Unteransprüche.

Die Antriebswelle kann bei einer solchen Ausbildung von einem innerhalb des Schubkörpers liegenden Antriebsaggregat, wie beispielsweise einem Elektromotor angetrieben werden. Dieses Antriebsaggregat kann ortsfest angeordnet sein.

Die für das Verhältnis zwischen Drehzahl der Antriebswelle und Axialweg des Schubkörpers maßgebenden Parameter der sich bewegenden Teile der erfindungsgemäßen Vorrichtung lassen sich in einer nach dem Verschiebeweg aufgelösten Gleichung wie folgt zusammenfassen.

$$S_{ax} = U_a \bullet (Ps \bullet \frac{1}{d_{wa}+d_{wr}} - Pr \bullet \frac{d_{gs}}{d_{gr} \bullet d_{gr}}) \bullet \frac{d_{wa} \bullet d_{gr}}{d_{gr} + d_{wr}}$$

In dieser Gleichung bedeuten

$S_{ax}$ = Axialweg des Schubkörpers
$U_a$ = Anzahl der Umdrehungen der Antriebswelle
$Ps$ = Steigung der Rillen des Schubkörpers
$Pr$ = Steigung der Rillen der Planetenrollen
$d_{gs}$ = Durchmesser der Rillen des Schubkörpers
$d_{gr}$ = Durchmesser der Rillen der Planetenrollen
$d_{wa}$ = Wälzkreisdurchmesser der Verzahnung des Antriebswellen-Ritzels
$d_{wr}$ = Wälzkreisdurchmesser der Verzahnung der Planetenrollen.

Der Käfig, in dem die Planetenrollen lagern, kann dazu dienen, die Planetenrollen zu führen und die von den Planetenrollen ausgehenden Axialkräfte aufzunehmen. In diesem Fall ist der Käfig an dem Antriebsgehäuse axial fixiert gelagert.

Die Axialkräfte der Planetenrollen können aber auch direkt von der Antriebswelle aufgenommen werden. In diesem Fall ist die Antriebswelle axial fixiert an dem Antriebsgehäuse zu lagern.

Zur Übertragung der axialen Kräfte von den Planetenrollen auf die Antriebswelle können die Planetenrollen zusätzlich zu ihren Antriebsrillen mit Lagerrillen versehen sein, die in entsprechende Lagerrillen der Antriebswelle axial kraftabstützend eingreifen.

Die in die Lagerrillen der Planetenrollen eingreifenden Gegenrillen bzw. Gegenprofile müssen nicht Bestandteil der Antriebswelle sein. Sie müssen lediglich drehbar und gegenüber dem Antriebsgehäuse axial fixiert sein.

Das Antriebsgehäuse für das Antriebsaggregat der Antriebswelle ist insbesondere innerhalb des als Schubkörper dienenden Hohlkörpers angeordnet. Der Hohlkörper besitzt bevorzugt die Form eines mit einer Innenrillierung versehenen Rohres.

Grundsätzlich ist es auch möglich, daß die Antriebsrillen der Planetenrollen gleichzeitig als deren Lagerrillen zur axialen Abstützung an einem rotierenden radial innerhalb der Umlaufbahn der Planetenrollen liegenden Lagerkörper dienen.

Der Lagerkörper kann auch in diesem Fall fest mit der Antriebswelle verbunden sein, wobei dann allerdings die Antriebsrillen der Planetenrollen sowie die Lagerrillen des Lagerkörpers jeweils steigungslos ausgebildet sein sollten. Ferner müssen bei einer solchen Ausführung die Werte der mittleren Durchmesser der Rillen des Lagerkörpers und des Wälzkreises der Verzahnung zwischen dem Antriebs-Ritzel der Antriebswelle und den Planetenrollen übereinstimmen. Dies gilt grundsätzlich für Ausführungen, bei denen Antriebsrillen der Planetenrollen in Gegen-Rillen einer Antriebswelle eingreifen, die mit den Planetenrollen direkt verzahnt ist.

Die Innenrillierung des Hohlkörpers kann insbesondere ein mehrgängiges Gewinde sein. Bei bestimmten Rillen-Kombinationen der drehbar ineinander greifenden Teile der Antriebsvorrichtung ist ein mehrgängiges Gewinde insbesondere mit Bezug auf die Rillierung des Hohlkörpers notwendig.

Die erfindungsgemäße Vorrichtung besitzt den Vorteil, daß der Schubkörper in der Form eines Rohres über eine Strecke ausgefahren werden kann, auf der zuvor kein Führungskörper vorhanden sein muß. Durch die Ausbildung als Rohr besitzt der Schubkörper eine hohe Knickfestigkeit. Darüber hinaus sind die innerhalb des Rohres liegenden Antriebselemente durch einen jeweils endseitigen Verschluß des Rohres einfach und sicher kapselbar. Der Schubkörper kann zum Gehäuse des Antriebsaggregats einfach abgedichtet werden.

Ausführungsbeispiele der Erfindung sind in der Zeichnung dargestellt.

Es zeigen

Fig. 1     einen Längsschnitt durch eine Antriebsvorrichtung mit einem hohlen Schubkörper und einem gelagerten Planetenrollen-Käfig,

Fig. 2     einen Schnitt durch die Antriebsvorrichtung nach Linie II-II in Fig. 1,

Fig. 3     einen Schnitt durch eine Antriebsvorrichtung wie in Fig. 1, bei der die Planetenrollen über in diesen zusätzlich vorgesehene steigungslose Lagerrillen axial fixiert sind,

Fig. 4  einen Längsschnitt durch eine Antriebsvorrichtung wie in Fig. 1, bei der die Planetenrollen zu ihrer axialen Fixierung mit ihren Antriebsrillen in Gegenrillen eines gegenüber der Antriebswelle rotierend gelagerten Lagerkörpers eingreifen.

Eine von einem nicht dargestellten in einem Antriebsgehäuse 11 untergebrachten Elektromotor angetriebene Antriebswelle 1 ist mit einem Ritzel 2 versehen.

Das Ritzel 2 treibt insgesamt vier Planetenrollen 3 an, die an ihrem dem Antriebsgehäuse 11 des Elektromotors zugewandten Ende jeweils mit einem Verzahnungsbereich 4 versehen sind. Der Antrieb der Planetenrollen 3 mit Hilfe des Ritzels 2 erfolgt jeweils über diese Verzahnungsbereiche 4. Die Planetenrollen 3 sind in einem Käfig 5 gelagert.

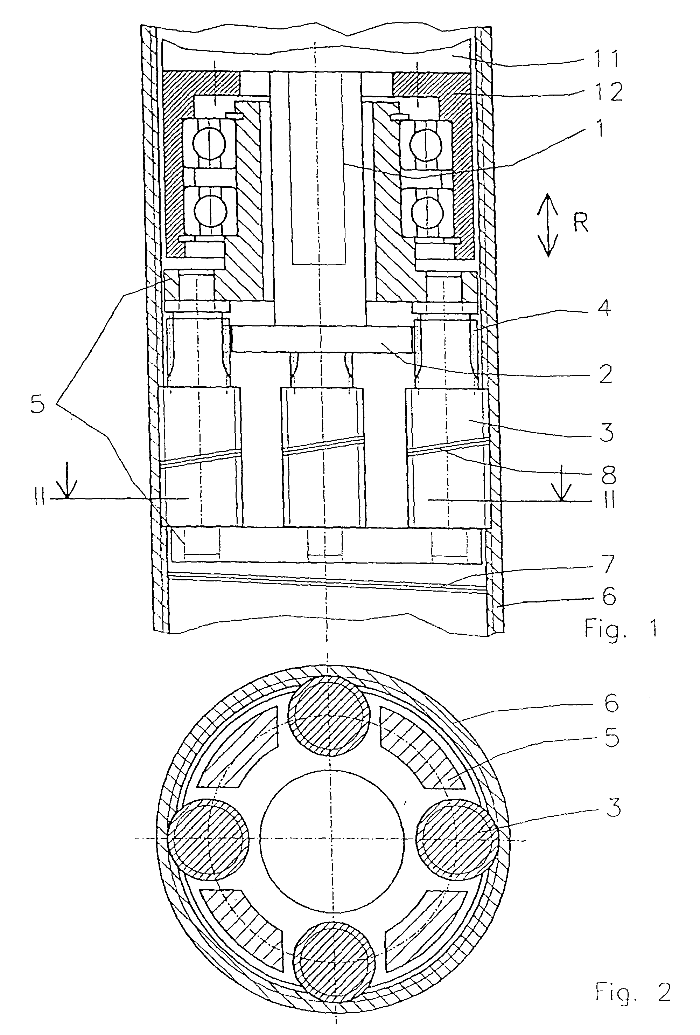

Bei der Ausführung nach Fig. 1 ist der Käfig 5 in einem an dem Antriebsgehäuse 11 fest angebundenen Lagerring 12 gelagert und axial fixiert. Durch die Lagerung in dem Käfig 5 sind die Planetenrollen 3 axial und in Umfangsrichtung eindeutig und unveränderbar fixiert.

Die Planetenrollen 3 greifen von radial innen in einen hohlen Schubkörper 6 ein, der im vorliegenden Fall als eine Art Rohr ausgebildet ist.

Sowohl die Planetenrollen 3 als auch der Schubkörper 6 sind jeweils mit umlaufenden Rillen 8 bzw. 7 versehen, wobei in dem dargestellten Beispiel beide Rillen Gewinderillen sind. Es ist allerdings ausreichend, daß lediglich eine dieser beiden Rillen eine Gewinderille ist. Durch u.a. die Festlegung der Steigung dieser Rillen 7 und 8, bzw. nur einer dieser beiden Rillen, wenn nur eine Gewinderille vorgesehen ist, wird das Übersetzungsverhältnis zwischen der Umdrehungszahl der Antriebswelle 1 und dem Axialweg des Schubkörpers 6 bestimmt. Das genaue Verhältnis ergibt sich aus der eingangs angegebenen Gleichung für den Axialweg des Schubkörpers 6. Der Schubkörper 6 kann lediglich eine Axialbewegung ausführen, wofür er entsprechend gelagert und geführt ist. Bei einem Gewinde innerhalb des Schubkörpers 6 kann dieses mehrgängig sein.

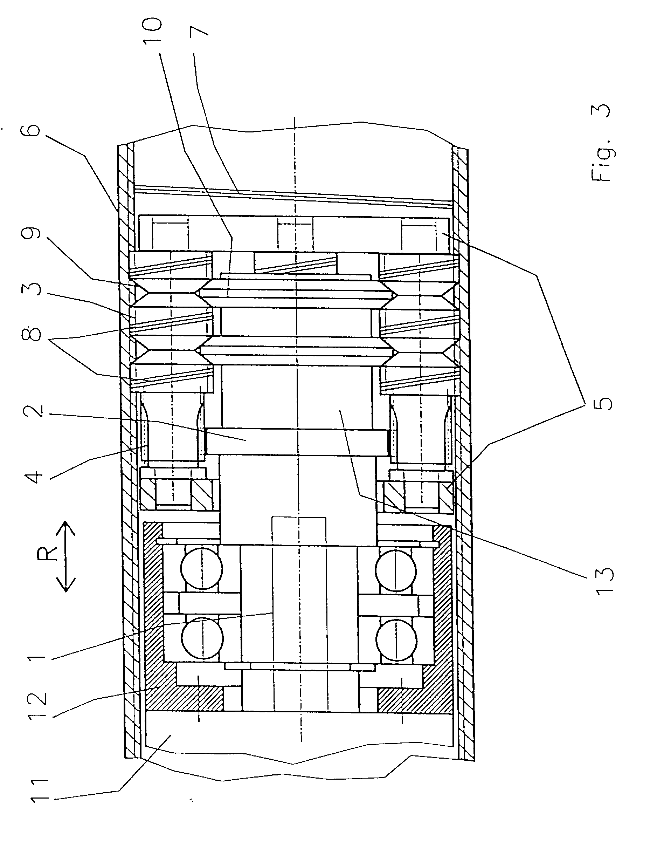

Bei der Ausführung nach Fig. 3 besitzen die Planetenrollen 3 zusätzliche Lagerrillen 9, die radial tiefer ausgebildet sind als die Rillen 7 und 8. Bei diesen Lagerrillen 9 greifen die Planetenrollen 3 in entsprechende Rillen 10 eines fest mit der Antriebswelle 1 verbundenen Lagerkörpers 13 ein, wodurch eine axiale Fixierung der Planetenrollen 3 bei einem axial unfixierten Käfig 5 erreicht wird.

Bei einer Drehung der Antriebswelle 1 bewegt sich der Schubkörper 6 je nach Auslegung der Steigung der Rillen 7 und 8 sowie nach der Drehrichtung der Antriebswelle 1 in einer der mit dem Pfeil R angegebenen Richtungen.

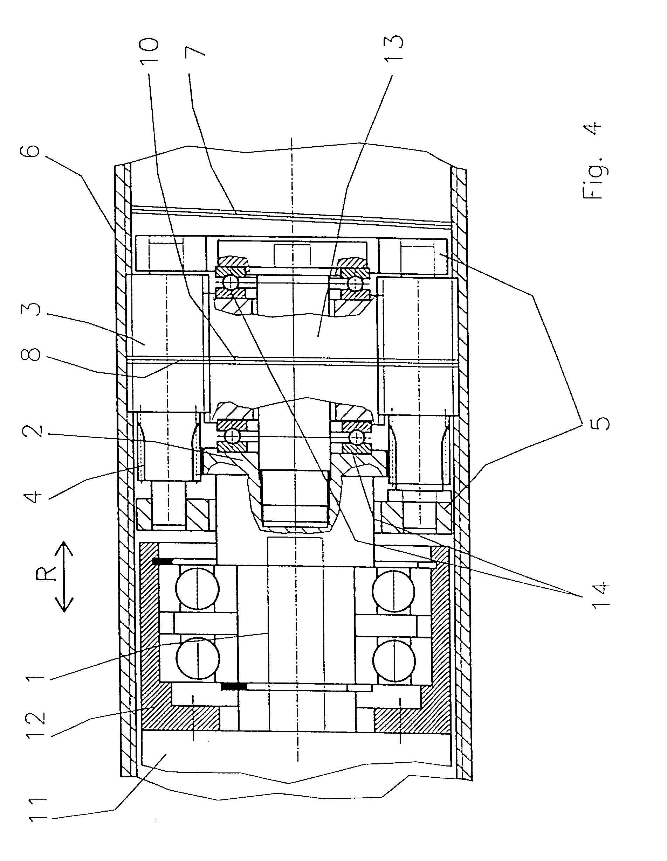

Bei der Antriebsvorrichtung nach Fig. 4 ist der Lagerkörper 13 axial fixiert frei drehbar an der Antriebswelle 1 gelagert und zwar über zwei Axial-Wälzlager 14, von denen jeweils eines an jeder der beiden Stirnseiten des Lager-Körpers 13 vorgesehen ist. Hierdurch kann der Wälzkreisdurchmesser des Antriebsritzels 2 mit Bezug auf dessen Eingriff in den Verzahnungsbereich 4 der Planetenrollen 3 unabhängig von dem mittleren Durchmesser der Lagerrillen 10 des Lagerkörpers 13 gewählt werden.

Die Antriebsrillen der Planetenrollen 3, die bei dieser Ausführung auch gleichzeitig als Lagerrillen dienen, können steigungslose Rillen oder eine Gewinderille sein. Sind die Planetenrollen 3 mit Gewinderillen ausgestattet, so muß auch der Lagerkörper 13 entsprechende Gewinderillen besitzen. Sind die Planetenrollen 3 dagegen mit steigungslosen Rillen versehen, so muß auch der Lagerkörper 13 entsprechend geformte Rillen aufweisen.

Unter Verwendung der oben zitierten Gleichung wird nachfolgend ein konkretes Beispiel angegeben.

$Ua$ = 1 Umdrehung
$Ps$ = 1 mm
$Pr$ = 0
$d_{gs}$ = 10 mm
$d_{gr} = d_{wr}$ = 3 mm
$d_{wa}$ = 4 mm

Mit den vorstehenden Werten ergibt sich für 1 Umdrehung der Antriebswelle ein axialer Verschiebeweg des Schubkörpers von $s_{ax}$ = 0,286 mm.

Das Antriebsritzel 2 kann über eine Kupplung kardanisch angetrieben werden, so daß zwischen der Antriebsachse und der Achse des Schubkörpers 6 ein Schwenkwinkel realisiert werden kann.

**Patentansprüche**

1.  Vorrichtung zur Umwandlung einer Dreh- in eine Axialbewegung mit von einer Antriebswelle aus einem ortsfesten Antriebsgehäuse heraus angetriebenen umfangsmäßig auf gleichem Abstand gehaltenen Planetenrollen und einem durch die Planetenrollen axial verschiebbaren Schubkörper, bei der

    a) die Antriebswelle (1) mit einem Antriebszahnrad (2) versehen ist,
    b) das Antriebszahnrad (2) in Planetenrollen (3) kämmt, die für den Eingriff des Antriebszahnrades (2) einen Bereich mit Verzahnung aufweisen,
    c) die Planetenrollen einen mit Antriebsrillen (8) versehenen Bereich besitzen und axial gegenüber der Antriebswelle (1) fixiert gelagert sind,
    d) der Schubkörper (6) mit Antriebsrillen (7) versehen ist,
    e) die Planetenrollen (3) den Schubkörper (6) antreiben, indem ihre Antriebsrillen (8) in die Antriebsrillen (7) des Schubkörpers eingreifen,
f) die Rillen (7 bzw. 8) mindestens des Schubkörpers (6) oder der Planetenrollen (3) Gewinderillen sind,
g) die Antriebswelle (1) in einem Zentrum der Kreisumlaufbahn der Planetenrollen (3) gelagert ist,
h) der Schubkörper (6) ein die Planetenrollen (3) umfassender Hohlkörper ist,
i) die Planetenrollen (3) in einem rotierbaren Käfig (5) gelagert sind,

**dadurch gekennzeichnet,** daß die Antriebsrillen (8) der Planetenrollen (3) die Antriebswelle (1) nicht berühren.

2. Vorrichtung nach Anspruch 1,
**dadurch gekennzeichnet,** daß der Käfig (5) an dem Antriebsgehäuse (11) der Antriebswelle (1) axial fixiert wälzgelagert ist.

3. Vorrichtung nach Anspruch 1,
**dadurch gekennzeichnet,** daß in den Planetenrollen (3) Lagerrillen (9) vorgesehen sind, mit denen die Planetenrollen (3) in entsprechend axial unbeweglichen Gegen-Lagerrillen (10) axial fixiert sind.

4. Vorrichtung nach Anspruch 3,
**dadurch gekennzeichnet,** daß die Gegenrillen (10) Bestandteil der Antriebswelle (1) sind.

5. Vorrichtung nach Anspruch 1,
**dadurch gekennzeichnet,** daß die Antriebsrillen (8) der Planetenrollen (3) in axial unverschiebbare Gegen-Lagerrillen (10) eines in der Achse der Antriebswelle (2) rotierenden Lagerkörpers (13) eingreifen.

6. Vorrichtung nach Anspruch 4,
**dadurch gekennzeichnet,** daß der Lagerkörper (13) fest mit der Antriebswelle (1) verbunden ist und daß die Antriebs- und Lagerrillen der Planetenrollen (3) bzw. des Lagerkörpers (13) jeweils steigungslos sind.

7. Vorrichtung nach einem der Ansprüche 4 bis 6,
**dadurch gekennzeichnet,** daß die Werte des mittleren Durchmessers der Lagerrillen (10) des Lagerkörpers (13) und des Wälzkreisdurchmessers der Verzahnung zwischen dem Antriebsritzel (2) und den Planetenrollen (3) übereinstimmen.

8. Vorrichtung nach Anspruch 5,
**dadurch gekennzeichnet,** daß der Lagerkörper (13) axial fixiert, drehbar an der Antriebswelle (1) gelagert ist.

9. Vorrichtung nach einem der vorhergehenden Ansprüche,
**dadurch gekennzeichnet,** daß das Antriebsgehäuse (11) innerhalb eines als Schubkörper (6) dienenden Hohlkörpers liegt.

**Claims**

1. A device for converting rotary motion into axial motion, having planetary rollers which are driven from a stationary drive housing by a drive shaft and are held circumferentially at the same distance apart, and having a thrust element which can be displaced axially by the planetary rollers, in which device

a) the drive shaft (1) is provided with a driver gear wheel (2),
b) the drive gear wheel (2) meshes with planetary rollers (3) which have a region with toothing for the engagement of the drive gear wheel (2),
c) the planetary rollers have a region provided with drive grooves (8) and are mounted in an axially fixed manner in relation to the drive shaft (1),
d) the thrust element (6) is provided with drive grooves (7),
e) the planetary rollers (3) drive the thrust element (6), in that their drive grooves (8) engage in the drive grooves (7) of the thrust element,
f) the grooves (7 or 8, respectively) at least of the thrust element (6) or of the planetary rollers (3) are thread grooves,
g) the drive shaft (1) is mounted in a center of the orbit of the planetary rollers (3),
h) the thrust element (6) is a hollow body enclosing the planetary rollers (3),
i) the planetary rollers (3) are mounted in a rotatable cage (5),

wherein the drive grooves (8) of the planetary rollers (3) do not contact the drive shaft (1).

2. The device as claimed in claim 1, wherein the cage (5) is mounted such that it can roll in an axially fixed manner on the drive housing (11) of the drive shaft (1).

3. The device as claimed in claim 1, wherein there are provided in the planetary rollers (3) bearing grooves (9) with which the planetary rollers (3) are axially fixed in correspondingly axially immovable mating bearing grooves (10).

4. The device as claimed in claim 3, wherein the mating grooves (10) are a component part of the drive shaft (1).

**5.** The device as claimed in claim 1, wherein the drive grooves (8) of the planetary rollers (3) engage in axially non-displaceable mating bearing grooves (10) of a bearing element (13) rotating on the axis of the drive shaft (2).

**6.** The device as claimed in claim 4, wherein the bearing element (13) is firmly connected to the drive shaft (1), and in that the drive and bearing grooves of the planetary rollers (3) and of the bearing element (13) respectively have zero pitch.

**7.** The device as claimed in claim 4 to 6, wherein the values of the mean diameter of the bearing grooves (10) of the bearing element (13) and of the rolling circle diameter of the toothing between the drive pinion (2) and the planetary rollers (3) agree.

**8.** The device as claimed in claim 5, wherein the bearing element (13) is mounted on the drive shaft (1) in an axially fixed and rotatable manner.

**9.** The device as claimed in one of the preceding claims, wherein the drive housing (11) is located inside a hollow body serving as thrust element (6).

**Revendications**

**1.** Dispositif de conversion d'un mouvement rotatif en un mouvement axial, avec des rouleaux planétaires entraînés par un arbre primaire, à partir d'un carter moteur stationnaire, et maintenus à une distance égale dans le sens périphérique, et avec un corps de poussée pouvant être déplacé dans le sens axial par les rouleaux planétaires, dispositif sur lequel

a) l'arbre primaire (1) est muni d'une roue dentée motrice (2),
b) la roue dentée motrice (2) engrène dans des rouleaux planétaires (3), qui présentent une zone de denture pour l'engagement de la roue dentée motrice (2),
c) les rouleaux planétaires présentent une zone munie de rainures d'entraînement (8), et sont logés et fixés dans le sens axial par rapport à l'arbre primaire (1),
d) le corps de poussée (6) est muni de rainures d'entraînement (7),
e) les rouleaux planétaires (3) entraînent le corps de poussée (6), leurs rainures d'entraînement (8) s'engageant notamment dans les rainures d'entraînement (7) du corps de poussée,
f) les rainures (7 et/ou 8) du corps de poussée (6) ou des rouleaux planétaires (3), au moins, sont des gorges de filet,
g) l'arbre primaire (1) est logé dans un centre de l'orbite circulaire des rouleaux planétaires (3),
h) le corps de poussée (6) est un corps creux enveloppant les rouleaux planétaires (3),
i) les rouleaux planétaires (3) sont logés dans une cage (5) rotative,

**caractérisé en ce que** les rainures d'entraînement (8) des rouleaux planétaires (3) n'entrent pas au contact de l'arbre primaire (1).

**2.** Dispositif suivant la revendication 1, **caractérisé en ce que** la cage (5) est montée sur roulement, avec une fixation axiale, sur le carter moteur (11) de l'arbre primaire (1).

**3.** Dispositif suivant la revendication 1, **caractérisé en ce que** des rainures d'appui (9) sont prévues dans les rouleaux planétaires (3), rainures par lesquelles les rouleaux planétaires (3) sont fixés dans le sens axial dans des contre-rainures d'appui (10), immobiles en conséquence dans le sens axial.

**4.** Dispositif suivant la revendication 3, **caractérisé en ce que** les contre-rainures (10) font partie intégrante de l'arbre primaire (1).

**5.** Dispositif suivant la revendication 1, **caractérisé en ce que** les rainures d'entraînement (8) des rouleaux planétaires (3) s'engagent dans des contre-rainures d'appui (10), immobiles dans le sens axial, d'un corps de palier (13) tournant dans l'axe de l'arbre primaire (1).

**6.** Dispositif suivant la revendication 4, **caractérisé en ce que** le corps de palier (13) est assemblé fixement avec l'arbre primaire (1), et en ce que les rainures d'entraînement et d'appui des rouleaux planétaires (3) et/ou du corps de palier (13) sont respectivement sans pas.

**7.** Dispositif suivant l'une des revendications 4 à 6, **caractérisé en ce que** les valeurs du diamètre moyen des rainures d'appui (10) du corps de palier (13) et du diamètre du cercle de roulement de la denture entre le pignon moteur (2) et les rouleaux planétaires (3) coïncident.

**8.** Dispositif suivant la revendication 5, **caractérisé en ce que** le corps de palier (13) est fixé dans le sens axial, est logé avec une possibilité de rotation sur l'arbre primaire (1).

**9.** Dispositif suivant l'une des revendications précédentes, **caractérisé en ce que** le carter moteur (11) se situe à l'intérieur d'un corps creux, servant de corps de poussée (6).

Fig. 1

Fig. 2

Fig. 3

Fig. 4